# EUROPEAN PATENT APPLICATION

(11) **EP 1 156 500 A1**
(43) Date of publication of application: **21.11.2001**
(21) Application number: 99937120.6
(22) Date of filing: 03.08.1999
(51) Int. Cl.: H01G 9/00, H01G 9/04

(54) **ASYMMETRIC ELECTROCHEMICAL CAPACITOR**

(30) Priority: 27.11.1998 RU 98121076
(71) Applicant: Razumov, Sergey Nikolaevich, Moscow (RU)
(72) Inventor: RAZUMOV, Sergey Nikolaevich, Moscow (RU); LITVENENKO, Sergey Vitalievich, Moscow (RU); KLEMENTOV, Arkadiy Dmitrievich, Troitzk 142092/g (RU); BELAYKOV, Aleksey Ivanovich, Kursk, 305045 (RU)
(74) Representative: Andrae, Steffen, Dr.
(86) International application number: RU9900271
(87) International publication number: WO0033336

(57) **Abstract**

The present invention pertains to electric capacitors having a large capacity and used for accumulating electric energy, and essentially relates to asymmetric electrochemical capacitors.

The asymmetric electrochemical capacitor of the present invention has a substantially increased specific energy as well as an extended service life. To this end, the asymmetric electrochemical capacitor comprises a body (5), at least one installed pair of electrodes comprising a first (1) and a second (2) electrode, an electrolyte (3) arranged between said electrodes, a collector and a separator (4). The absolute capacities of the electrodes are different, i.e. the first electrode has a higher absolute capacity than the second one.

One of the electrodes is made of a material allowing for the energy build-up during a Faraday process, while the other electrode is made of a material allowing for the energy build-up in a dual electric layer.

## Description

### Field of the Invention

The invention relates to electrochemical capacitors having high capacitance for storing the electric power and, particularly, to asymmetric electrochemical capacitors.

### Background of the invention

An electrochemical capacitor including a housing, two electrodes mounted therein, and electrolyte placed between the electrodes is known (WO 97/07518, Int. Cl. H 01 G 9/00, 1992). The electrodes have double electric layer at the electrode-electrolyte boundary. Furthermore, one of the electrodes can be made of a material allowing to carry out the Faraday process. Aqueous and non-aqueous electrolytes are used as the electrolyte.

An asymmetric electrochemical capacitor including a housing, at least a pair of electrodes mounted therein, the pair consisting of first and second electrodes, an electrolyte placed between the electrodes, and a separator (RU patent Nº 2054723, Int. Cl. H 01 G 9/00, 1996).

An aqueous electrolyte is used as the electrolyte. The specific energy is an important parameter for capacitors.

The capacitor specific energy is the ratio of an amount of energy stored by it to a capacitor mass or volume.

A high capacitor specific energy is a desired parameter, since it allows to decrease the capacitor mass and volume for a particular application field.

A utilization of non-aqueous electrolytes allows to reduce the operation voltage of the electrochemical capacitor and it's specific energy, respectively. However, non-aqueous electrolytes are sufficiently expensive and not sensitive to a water and/or oxygen percentage. It is more important that such electrolytes have less conductivity in comparison with aqueous electrolytes and, correspondingly, these capacitors have lower power parameters (RU patent Nº 2054723, Int. Cl. H 01 G 9/00, 1996).

The closest to the proposed capacitor by the technical essence is an asymmetric electrochemical capacitor including a housing, at least a pair of electrodes mounted therein, the pair consisting of first and second electrodes, an electrolyte and a separator placed between the electrodes, the absolute capacitances of the electrodes differing from each other, and the absolute capacitance of the first electrode is greater than the absolute capacitance of the second electrode (RU patent Nº 2093465, Int. Cl. H 01 G 9/04, 1997).

In the known structure the electrodes are made from one material.

However, the known capacitor has an insufficiently high specific electric capacitance. This is related with the fact that if one of the similar electrodes having a defined overall mass is increased, then the mass of other one would be decreased.

It is evident that the electric capacitance of the capacitor would be also decreased.

### Summary of the Invention

Technical problems to be solved by the proposed asymmetric electrochemical capacitor are a substantial increasing of its specific energy and increasing of the service life.

The set problems are solved by creating an asymmetric electrochemical capacitor including a housing, at least a pair of electrodes mounted therein, the pair consisting of first and second electrodes, an electrolyte placed between the electrodes, and a separator, the absolute capacitances of the electrodes being different, and the absolute capacitance of the first electrode is greater than the absolute capacitance of the second electrode, wherein, according to the invention, one of the electrodes is made from a material allowing to store the energy during the Faraday process, and other one is made from a material allowing to store the energy in the double electric layer.

The invention is also characterized in that the absolute capacitance of the first electrode is at least three times greater than the absolute capacitance of the second electrode.

This allows to bring the capacitor capacitance closer to the capacitance of one electrode.

The invention is characterized in that one of the electrodes is made from the carbon material, and other one is made from the material having a possibility of a reversible electrochemical oxidation in the aqueous solutions.

It is also possible the make the second electrode from the water-sorbing material.

Since the specific capacitance of the electrode made from the material allowing to carry out the Faraday process is substantially greater than the capacitance of other electrode, the total capacitance of the capacitor approximates the capacitance of the electrode made from the carbon material.

A choice of the carbon material including the activated carbon, or carbon cloth, or petroleum pitch, or glass-carbon, or carbon black, as well as various combinations thereof is caused by that they have a developed surface and, subsequently, the greater capacitance of the double electric layer.

The invention is characterized in that the specific capacitance of the first electrode is greater than the specific capacitance of another electrode.

This allows to obtain electrodes with different absolute capacitance while the geometric dimensions of the electrodes are similar.

An embodiment of the asymmetric electrochemical capacitor having the first electrode which volume is less of equal to the second electrode volume allows to reduce the capacitor overall dimensions.

The invention is characterized in that the first electrode mass is less or equal to the second electrode mass.

This allows the reduce the capacitor mass.

An embodiment of the asymmetric electrochemical capacitor is possible wherein the first electrode absolute capacitance is greater than the second electrode absolute capacitance, and the first electrode specific capacitance is greater than the second electrode specific capacitance.

An embodiment of the asymmetric electrochemical capacitor is possible wherein the first electrode absolute capacitance is greater than the second electrode absolute capacitance, and the first electrode specific capacitance is less than the second electrode specific capacitance.

This allows to obtain capacitors with different specific characteristics.

The invention is also characterized in that aqueous solutions are used as the electrolyte, and aqueous solutions of hydroxides or carbonates of alkali metals, or sulfuric acid, or perchloric acid can be used as the aqueous solutions.

These solutions have an ion conductivity and low ohmic resistance in a wide temperature range.

During the patent search, no solutions were found similar to the proposed one and, hence, the proposed invention meet the "novelty" criterion.

The essence of the proposed solution does not evidently follow from known ones, thereby allowing to conclude that the invention meets the "inventive step" criterion.

### Description of the Drawings

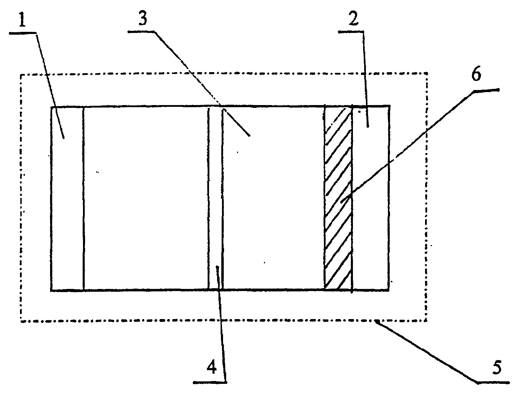

The essence of the proposed invention will be clear from the following description of the capacitor structure in connection with the drawing showing the schematic view of the asymmetric electrochemical capacitor.

The asymmetric electrochemical capacitor has a first electrode with a greater capacitance (1) and a second electrode with a less capacitance (2), and an electrolyte (3) between them. A separator (4) separates the electrodes (1) and (2). Inner components of the capacitor are placed into a housing (5).

An asymmetry between capacitance values of the electrodes (1) and (2) allows to increase the specific energy of the asymmetric electrochemical capacitor in comparison with known symmetric electrochemical capacitors. A full capacitance C of the capacitor is an inverse value of the sum of inverse values of the first and second electrodes capacitances C₁ and C₂: 1/C=1/C₁+1/C₂.

For a symmetric capacitor, when C₁ is equal to C₂, the capacitor's full capacitance is equal to the half capacitance of one of the electrodes.

However, if the absolute capacitance of one of the electrodes would be increased, thus the capacitor's full capacitance would tend to the capacitance of the electrode having the less capacitance.

Thus, the asymmetric capacitor could have doubled value of the capacitance in comparison with the symmetric capacitor.

Since the energy stored in the electrochemical capacitor is directly proportional to it's capacitance, then a doubling of it's capacitance doubles the value of the energy stored by the capacitor.

Preferably, the electrode with the greater capacitance (1) has the capacitance at least three times greater than the capacitance of the electrode with the less capacitance (2). More preferably, the values of electrode capacitances differ, at least, 10 times.

Preferably, the difference in the absolute capacitance of the electrodes is obtained while utilizing various materials for every electrode, and one of the elements must have greater specific capacitance per mass or volume unit than other one. For example, one of the electrodes is made of the material or its oxide (hydroxide) while another electrode is made of the activated carbon material.

The specific capacitance of the activated materials appropriate for manufacturing the capacitors is equal to 50-200 F/g, and the average specific capacitance of, for example, the nickel hydroxide is in the potential range from 0 to 0.4 V in the standard hydrogen scale.

The electrode with the greater capacitance (1) can be made from the material with a high capacitance which is determined by the Faraday process. Such materials include ruthenium, rhodium, palladium, osmium, iridium, cobalt, nickel, manganese, iron, platinum, lead, titanium, molybdenum, tungsten, vanadium as well as their alloys, oxides, hydroxides, carbides and various combinations thereof. Water-sorbing materials also could be used.

In the Faraday pseudo-capacitance process proceeding on the electrode with the greater capacitance (1) the redox reactions are employed. The electrochemical processes inherent to the material are kinetically and thermodynamically reversible while the redox reactions are proceeded in a wide potential range.

Transferring and storing the charge in the electrode with the greater capacitance (1) proceed as a result of change in an oxidation degree during the reaction. This process is similar with the process proceeding in conventional rechargeable batteries.

The Faraday process allows, in some cases, to carry out a capacitor charging and discharging in a wider range of voltages than in the case of utilizing only the electrodes in which the charge is stored in the double electric layer.

The electrode (2) with the less capacitance stores the charge in the double electric layer. The electrode (2) with the less capacitance can include the following electrode materials: activated carbon, petroleum pitch, glass carbon, carbon black, synthetic carbon fibers and clothes, materials on the basis of carbides, nitrides, as well as various combinations thereof.

The electrode (2) is in the contact with an electrolyte (3) and impregnated by it. The double electric layer is formed on a surface (6) of the electrode with the less capacitance (2).

In order to obtain a possibility to store more energy, a high specific surface of the carbon material is used.

The electrolyte (3) can be aqueous, and includes solutions of carbonates and/or hydroxides of alkali materials such as sodium, potassium, lithium etc. Various acids can be used too.

It is also possible to use non-aqueous electrolytes.

A separator (4) is an ion penetrable membrane. For example, such materials as paper, micropore polymer films, glass material can be used for the separator. In principle, the capacitors can be made without separator.

Grids, meshes, foil etc. can be used as current collectors.

In the following example, the carbon electrode is utilized in combination with pseudo-capacitance electrode comprising a metal hydroxide under operation voltage up to 1.7-1.8 V. This increase the operation voltage almost twice in comparison with contemporarily utilized symmetric electrochemical capacitors.

Increased operation voltage provides the increase of the specific stored energy, since the specific energy is proportional to the operation voltage to the second power.

The electrode with the greater capacitance (1) is made from the material having greater specific capacitance in comparison with the material of the electrode having the less specific capacitance. Thus, in spite of greater absolute capacitance of the electrode with the greater capacitance, it can have the volume and mass even less than the electrode with the less capacitance.

When discharging the capacitor made in accordance with the invention, the electrode (1) discharges only partially thereby promoting to increase its service life and resource. The resource of the electrode (2) is practically unlimited, since some processes accompanied with change in a phase composition of materials are proceeded on it.

Thus, in comparison with the storage cells the asymmetric capacitor according to the present invention demonstrates a longer service life in a cycling mode and a possibility of fast charging.

The storage batteries have a limited service life from hundreds to one thousand charge-discharge cycles, and a necessary charging time from 30 minutes to 10 hours.

The electrochemical capacitors according to the present invention can have a service life in a cycling mode more than 100,000 cycles, and a necessary charging time from several seconds to several minutes.

### Preferred Embodiments of the Asymmetric Electrochemical Capacitor

*Example 1.* A capacitor has a negative electrode from the carbon material, an alkali electrolyte, and a positive electrode comprising the nickel hydroxide.

The negative electrode is made from an activated carbon material with a specific surface from 900 to 1100 m²/g. The thickness of the electrode is 1.2 mm and the area of its surface is 36 cm². A nickel foil 0.05 mm in thickness is taken as a current collector. The positive electrode of a metal-ceramics construction comprises the nickel hydroxide as an active material. Its thickness is 0.33 mm and capacitance is 0.3 A/h. The electrolyte is an aqueous solution of the potassium hydroxide with a density 1.29 g/cm³. A separator with a density 0.1 mm is made from an unwoven polypropylene canvas.

The element volume is 6.05 cm³, the element capacitance is 418 F (69.4 F/ cm³) in a voltage interval of 1.3 to 0.3 V.

For comparison, the symmetric capacitor provided with the same carbon electrodes have a volume of 9.36 cm³, and its capacitance is 210 F (22.4 F/cm³) in a voltage interval of 1.0 to 0.0 V.

Thus, the absolute capacitance of the asymmetric capacitor is about twice greater than of the symmetric one. The capacitance per volume unit of the asymmetric capacitor is more than three times greater than for the symmetric one. The specific energy value for the asymmetric capacitor is 55 J/cm³, and it is 11.2 J/cm³ for the symmetric one.

Thus, the present invention allows to rise the specific energy for 4.9 times.

*Example 2.* The capacitor corresponding to this Example differs for the capacitor described in the Example 1 in that it has the positive electrode comprising the lead dioxide. A lead foil of 0.2 mm in thickness is used as a current collector (not shown). General thickness of the positive electrode is 0.4 mm and its capacitance is 0.34 A/h.

The aqueous solution of the sulfuric acid with a density 1.26 g/ cm³ is used as the electrolyte.

A lead foil of 0.2 mm in thickness is used as a current collector for the negative electrode.

This element volume is 6.84 cm³, the element capacitance is 770 F (113 F/ cm³) in a voltage interval of 1.6 to 0.8 V.

For comparison, the symmetric capacitor with the sulfuric acid taken as the electrolyte and with the same carbon electrodes, as in Example 1, has the volume of 10.44 cm³ and its capacitance is 392 F (37.5 F/cm³) in a voltage interval of 1.0 to 0.0 V.

Thus, in this case too, the absolute capacitance of the asymmetric capacitor is about twice greater than of a symmetric one. The capacitance per volume unit of the asymmetric capacitor is more than three times greater than for a symmetric one. The specific energy value for the asymmetric capacitor is 108 J/cm³, and for the symmetric one it is 18.8 J/cm³.

Thus, the present invention allows to rise the specific energy for 5.7 times.

*Example 3.* The capacitor corresponding to this Example differs for the capacitor described in the Example 2 in that the electrode from a carbon material is used as the positive electrode. The negative electrode is made from a lead foil of 0.2 mm in thickness and comprises a metal lead powder as an active material. The general thickness of the negative electrode is 0.3 mm and its capacitance is 0.4 A/h.

The element volume is 6.48 cm³, the element capacitance is 780 F (120 F/ cm³) in a voltage interval of 1.2 to 0.1 V.

In this case too, we possess the advantages on the specific capacitance and energy in comparison with the symmetric capacitor using the sulfuric acid as the electrolyte and described in Example 2.

*Example 4.* The capacitor was made utilizing the positive electrode from the activated carbon material with the specific surface 1400 m²/g, and 0.55 mm in thickness. The negative electrode was made from a water-sorbing material (the base formulation LaNi₅) by the technique of dry rolling up to 0.2 mm in thickness. The specific capacitance of the electrode is 0.9 A/h.

An aqueous solution of the potassium hydroxide with the density 1.28 g/cm³ was used as the electrolyte. A separator (4) separating the positive and negative electrodes was made from the unwoven polyvinylchloride canvas of 0.22 mm in thickness.

Several pairs of positive and negative electrodes with separators and electrolyte were mounted into a metal housing having dimensions 50×24×11 mm and sealed there.

This capacitor had the maximal operation voltage 1.4 V and the specific capacitance per volume 44 F/cm³.

For comparison, the specific capacitance of the symmetric carbon-carbon capacitor was 21 F/cm³ in a voltage interval of 1.0 to 0.5 V. In the given Example, the above mentioned advantages of the present invention are present too.

Other metal-hydride materials can also provide the advantages in the specific energy for the asymmetric electrochemical capacitors. In this case, the increase of the specific parameters of the capacitor is defined by a substantial difference in capacitances of two electrodes.

### Industrial Applicability

An asymmetric electrochemical capacitor has a pair of electrodes with non-equivalent absolute capacitances and an electrolyte between them.

If the ratio between the capacitances of two electrodes is substantially great, then the capacitance of the asymmetric electrochemical capacitor approximates the capacitance of the electrode with the less capacitance.

Thus, the asymmetric electrochemical capacitor has the capacitance about twice greater in comparison with the symmetric electrochemical capacitor which both electrodes are made similar to the electrode with the less capacitance of the asymmetric capacitor.

Due to this reason, the asymmetric electrochemical capacitor has advantages also in the specific energy as it is shown in the Examples.

## Claims

1. An asymmetric electrochemical capacitor including a housing (5), at least a pair of electrodes mounted therein, the pair consisting of first (1) and second (2) electrodes, an electrolyte (3) placed between the electrodes, a collector and a separator, absolute capacitances of the electrodes being different, and the absolute capacitance of the first electrode (1) being greater than the absolute capacitance of the second electrode (2), ***characterized* in that** one of the electrodes is made from a material allowing to store an energy during the Faraday process, and other one is made from a material allowing the store an energy storing in a double electric layer.

2. The asymmetric electrochemical capacitor according to the Claim 1, ***characterized* in that** the absolute capacitance of the first electrode (1) is at least three times larger than the absolute capacitance of the second electrode (2).

3. The asymmetric electrochemical capacitor according to any of Claims 1 to 2, ***characterized* in that** one of the electrodes is made from a carbon material and another one is made from an oxide in aqueous solutions.

4. The asymmetric electrochemical capacitor according to any of Claims 1 to 3, ***characterized* in that** the material of another electrode includes one of the following materials: ruthenium, rhodium, palladium, osmium, iridium, cobalt, lead, nickel, manganese, iron, platinum, titanium, molybdenum, tungsten as well as their alloys, oxides, hydroxides, carbides, and various combinations thereof.

5. The asymmetric electrochemical capacitor according to any of Claims 1 to 3, ***characterized* in that** another electrode is made from a water-sorbing material.

6. The asymmetric electrochemical capacitor according to the Claim 5, ***characterized* in that** an activated carbon, or carbon cloth, or petroleum pitch, or glass carbon, or carbon black, or various combinations thereof are chosen as the carbon material.

7. The asymmetric electrochemical capacitor according to any of Claims 1 to 6, ***characterized* in that** the specific capacitance of one of the electrodes is greater than the specific capacitance of another electrode.

8. The asymmetric electrochemical capacitor according to the Claim 7, ***characterized* in that** the absolute capacitance of the first electrode (1) is greater than the absolute capacitance of the second electrode (2), and the specific capacitance of the first electrode (10) is greater than the specific capacitance of the second electrode (2).

9. The asymmetric electrochemical capacitor according to the Claim 7, ***characterized* in that** the absolute capacitance of the first electrode (1) is greater than the absolute capacitance of the second electrode (2), and the specific capacitance of the first electrode (10) is less than the specific capacitance of the second electrode (2).

10. The asymmetric electrochemical capacitor according to any of Claims 1 to 9, ***characterized* in that** the volume of the first electrode (1) is less or equal to the volume of the second electrode (2).

11. The asymmetric electrochemical capacitor according to any of Claims 1 to 9, ***characterized* in that** the mass of the first electrode (1) is less or equal to the mass of the second electrode (2).

12. The asymmetric electrochemical capacitor according to any of Claims 1 to 11, ***characterized* in that** aqueous solutions are used as the electrolyte.

13. The asymmetric electrochemical capacitor according to the Claim 12, ***characterized* in that** the aqueous solutions of hydroxides or carbonates of alkali metals, or sulfuric acid, or perchloric acid are used as the electrolyte.
